(19) Europäisches Patentamt
European Patent Office
Office européen des brevets

(11) Numéro de publication: **0 248 709 B1**

# FASCICULE DE BREVET EUROPEEN

(45) Date de publication de fascicule du brevet: **06.05.92**  (51) Int. Cl.⁵: **C02F  3/28**, C02F 3/10

(21) Numéro de dépôt: **87401173.7**

(22) Date de dépôt: **25.05.87**

Le dossier contient des informations techniques présentées postérieurement au dépôt de la demande et ne figurant pas dans le présent fascicule.

(54) **Activateur biologique perfectionné pour fosse septique.**

(30) Priorité: **30.05.86 FR 8607805**

(43) Date de publication de la demande:
**09.12.87 Bulletin  87/50**

(45) Mention de la délivrance du brevet:
**06.05.92 Bulletin  92/19**

(84) Etats contractants désignés:
**AT BE CH DE ES GB GR IT LI LU NL SE**

(56) Documents cités:
**FR-A- 2 357 490**
**FR-A- 2 432 485**

**BLÄTTER FÜR LANDTECHNIK, no. 225, juin 1983, pages 1-9, Eidg. Forschungsanstalt für Betriebswirtschaft und Landtechnik, Tänikon, CH; A. WELLINGER et al.: "Güllezusatzmittel für die Biogasproduktion"**

(73) Titulaire: **EPARCO**
**78, rue de Provence**
**F-75009 Paris(FR)**

(72) Inventeur: **Philip, Hervé**
**La Soleiado E7 Avenue de Pont Trinquat**
**F-34000 Montpellier(FR)**

(74) Mandataire: **Derambure, Christian**
**Cabinet Bouju Derambure (Bugnion) S.A. 55, rue Boissonade**
**F-75014 Paris(FR)**

## Description

L'invention concerne un activateur biologique perfectionné pour fosse septique.

On connaît déjà un activateur biologique pour fosse septique qui se présente sous la forme d'un produit non corrosif, non toxique, finement divisé, de surface spécifique importante, constituant un support pour la flore microbienne anaérobie facultative, permettant d'augmenter la densité de saturation bactérienne dans la fosse septique pour une quantité équivalente de nutriments, se présentant, en solution, d'une part sous une forme colloïdale en suspension et, d'autre part, sous une phase floculante (document FR-A-2 357 490).

Ce brevet mentionne que la surface spécifique de l'activateur biologique décrit est inférieure à 1 m$^2$/g. De plus, la capacité d'échange cationique d'un tel activateur biologique connu peut être estimée de l'ordre de 9 meq/100 g.

L'emploi, comme composant de base principale de l'activateur biologique de l'état de la technique, d'argiles kaoliniques limite, du fait même des caractéristiques physico-chimiques de ces argiles, les valeurs des paramètres utiles pour la fonction d'activation biologique d'une fosse septique. C'est en particulier le cas de la surface spécifique et de la capacité d'échange cationique qui sont limitées en fonction de la composition même des argiles kaoliniques. Or, précisément, la surface spécifique et la capacité d'échange cationique sont des paramètres importants dont les valeurs devraient être, l'une comme l'autre, aussi élevées que possible pour réaliser de façon optimale l'activation biologique de la fosse septique. En effet, ces deux paramètres déterminent les échanges d'ions, l'absorption de substrats organiques et la fixation des bactéries et enzymes.

L'invention a donc pour objectif de perfectionner l'activateur biologique du type de celui de l'état de la technique, dont les limites ont été atteintes.

Cet objectif est atteint car l'activateur biologique selon l'invention d'une part a une surface spécifique (en m$^2$/g) importante comprise entre 25 et 60, et en particulier égale à 46 et, d'autre part, a une capacité d'échange cationique (en meq/100 g) comprise entre 9 et 32 et en particulier égale à 24.

Par conséquent, l'activateur biologique perfectionné selon l'invention a une surface spécifique de l'ordre de trente fois ou plus supérieure à celle de l'activateur biologique connu de l'état de la technique. La capacité d'échange cationique de l'activateur biologique perfectionné selon l'invention est de l'ordre de 2 à 3 fois celle de l'activateur biologique connu de l'état de la technique.

A cet effet, l'activateur biologique selon l'invention est constitué par un mélange intime de particules constituées de 75 % à 90 % d'une kaolinite présentant un potentiel d'oxydo-réduction voisin de celui des boues d'une fosse septique, notamment de l'ordre de - 500 mV - et de particules d'un matériau essentiellement vitreux présentant en combinaison une surface spécifique de 90 à 110 m$^2$/g, et notamment de 101 m$^2$/g et une capacité d'échange cationique de 56 meq/100 g à 70 meq/100 g, et, notamment de 63.1 meq/100 g.

Ces améliorations de la surface spécifique et de la capacité d'échange cationique sont obtenues sans que les autres paramètres importants de l'activateur biologique connu de l'état de la technique ne soient substantiellement affectés. C'est en particulier le cas du potentiel d'oxydo-réduction et de la structure phase colloïdale - phase floculante.

Les autres caractéristiques de l'invention résulteront de la description qui suivra d'une forme de réalisation possible mais non limitative d'un activateur biologique perfectionné conforme à l'invention.

Dans la description, les taux indiqués pour les constituants, ainsi que les matières volatiles sont exprimés par rapport au poids sec.

L'invention concerne un activateur biologique perfectionné pour fosse septique du type constitué par un produit en particules solides, non corrosif, non toxique, finement divisé, de surface spécifique importante, présentant en solution essentiellement une phase colloïdale en suspension et une phase floculante, ayant en solution un pouvoir réducteur d'origine minérale, ayant pour fonction de constituer un support pour la flore microbienne anaérobie d'une fosse septique en vue d'augmenter la densité de saturation bactérienne dans la fosse septique pour une quantité équivalente de nutriments.

Le phénomène d'activation biologique est en soi bien connu et ne fait pas directement l'objet de l'invention.

Selon l'invention, l'activateur biologique perfectionné a une surface spécifique (en m$^2$/g) comprise entre 25 et 60, notamment entre 30 et 50, en particulier égale ou voisine de 46.

Selon une autre caractéristique, l'activateur biologique perfectionné selon l'invention a une capacité d'échange cationique (en meq/100 g) comprise entre 9 et 32, notamment entre 14 et 32, et en particulier égale ou voisine de 24.

2

La surface spécifique mentionnée précédemment est obtenue avec un activateur biologique dont au moins 80 % des particules a une granulométrie inférieure à 16 microns environ, au moins 50 % des particules ayant une granulométrie inférieure à 4 microns environ.

Du fait que l'activateur biologique perfectionné selon l'invention peut comporter pour partie un matériau essentiellement vitreux en particules dont la granulométrie peut être réglée en fonction du degré de broyage et de tamisage utilisé, il est possible de régler la surface spécifique de l'activateur biologique, dans une certaine fourchette, alors même que la surface spécifique de l'autre constituant de l'activateur biologique perfectionné : principalement une kaolinite - ne peut être réglée davantage, la kaolinite formant des agrégats de particules.

Cependant, la surface spécifique dépend non seulement de la granulométrie des particules constituant l'activateur biologique mais également de la microporosité interne et ouverte des particules.

L'activateur biologique perfectionné selon l'invention a une densité apparente dans l'air comprise entre 0,95 et 1,17 et notamment égale à 1,06.

La densité dans et relative à l'eau - qui diffère de la densité réelle du fait de l'air éventuellement piégé dans la microporosité interne - est comprise entre 2 et 2,75, notamment entre 2,25 et 2,75 et en particulier égale à 2,5.

L'activateur biologique perfectionné pour fosse septique selon l'invention a un encombrement (c'est-à-dire un volume décanté dans l'eau par unité de poids) compris entre 1,5 et 2,6 litres par kilogramme notamment entre 2 et 2,6 et en particulier égal à 2,33. De plus, son taux de gonflement, c'est-à-dire l'augmentation du volume total d'une masse de particules du produit entre le milieu sec et le milieu aqueux après décantation rapporté au volume apparent sec de départ est (exprimé en %) compris entre 0 et 65 notamment entre 53 et 65 et en particulier égal à 59.

Le pH de l'activateur biologique selon l'invention, à savoir le pH d'un mélange de 20 g de l'activateur biologique en poudre en suspension dans 50 ml d'eau distillée bouillie, après deux minutes d'agitation et deux heures de repos est compris entre 6,8 et 7,9 notamment est égal à 7,2.

Ainsi que cela a été indiqué précédemment, le potentiel d'oxydo-réduction de l'activateur biologique selon l'invention, est proche de celui des boues d'une fosse septique. En particulier, ce potentiel d'oxydo-réduction pour 20 g d'activateur biologique en poudre selon l'invention dans 50 ml d'eau distillée à 20°C saturée en oxygène est de l'ordre de - 500 mV.

Le taux de matières volatiles (exprimé en pourcentage du poids sec de l'activateur biologique selon l'invention) est compris entre 6,5 et 9,5 notamment est compris entre 7,2 et 9,2, préférentiellement entre 7,3 et 9,1 et en particulier égal à 8,2.

L'activateur biologique selon l'invention comprend essentiellement, comme macroéléments, de la silice en $SiO_2$, de l'aluminium en $Al_2O_3$, du fer en $Fe_2O_3$ et du calcium en Ca 0. Plus particulièrement, l'activateur biologique selon l'invention comprend entre 43 % et 94 %, notamment entre 83 % et 91 %, préférentiellement entre 44 % et 89 % et en particulier entre 48 % et 81 % de silice ; entre 3 % et 30 %, notamment entre 5 % et 27 % d'aluminium ; entre 1,8 % et 7,7 %, notamment entre 2,3 % et 6,5 %, préférentiellement entre 2,7 % et 6 % et en particulier entre 3 % et 6 % de fer ; et enfin entre 1,3 % et 5,9 % notamment entre 1,8 % et 4,6 %, préférentiellement entre 2,2 % et 4,2 % et en particulier entre 2,4 % et 3,8 % de calcium.

Secondairement, l'activateur biologique selon l'invention comprend de l'ordre de 1 % à 2 % de Mg 0 et $Na_2O$ chacun et de l'ordre de moins d'1 % de $K_2O$ et $P_2O_5$ chacun.

L'activateur biologique selon l'invention comprend également des oligoéléments dont les ordres de grandeurs des teneurs en mg/kg sont les suivantes : Pour le manganèse entre 168 et 724 notamment entre 240 et 465 préférentiellement entre 300 et 380 et en particulier 344 ; pour le cobalt entre 169 et 277, notamment entre 173 et 216, préférentiellement entre 175 et 214 et en particulier 194 ; pour le zinc entre 601 et 1009, notamment entre 713 et 964, préférentiellement entre 750 et 918 et en particulier égal 834 ; pour le cuivre entre 1641 et 2976, notamment entre 2038 et 2815, préférentiellement entre 2170 et 2653 et en particulier 2412 ; pour le béryllium entre 37,8 et 69,4 notamment entre 47,2 et 65,5, préférentiellement entre 50,4 et 61,7 et en particulier 56,04 ; pour le titane entre 13068 et 16368, notamment entre 13200 et 16302, préférentiellement entre 13284 et 16236 et en particulier 14760.

L'activateur biologique pour fosse septique selon l'invention est constitué par un mélange intime de particules constitué de 75 % à 90 % d'une kaolinite présentant un potentiel d'oxydo-réduction voisin de celui des boues d'une fosse septique, notamment de l'ordre de - 500 mV et de particules d'un matériau essentiellement vitreux présentant en combinaison une surface spécifique de 90 à 110 $m^2$/g, et notamment de l'ordre de 101 $g/m^2$ et une capacité d'échange cationique de 56 meq/100 g à 70 meq/100 g et notamment de 63,1 meq/100g.

Plus spécialement, l'activateur biologique perfectionné selon l'invention comprend entre 75 % et 90 %, notamment de l'ordre de 80 %, de particules principalement de kaolinite et de 25 % à 10 %, notamment de l'ordre de 20 %, de matériaux vitreux.

Des essais comparatifs d'activation utilisant un témoin et l'activateur biologique selon l'invention ont été réalisés et ont donné les résultats suivants : le tableau 1 donne la demande chimique en oxygène et la production de gaz après 11 jours d'incubation dans un milieu ensemencé dont le substrat est de l'acétate de sodium, l'activateur biologique selon l'invention étant employé à une dose de 4 g/l. Le tableau 2 donne la production cumulée de gaz en fonction du temps, les essais ayant été effectués à 20°C dans des boues de fosse septique, l'activateur ayant été dosé à raison de 500 mg/l.

TABLEAU 1

|  | Témoin | Activateur selon l'invention | Variation |
|---|---|---|---|
| Demande chimique en oxygène (mgO$_2$/l) | 1 633 | 264 | - 618 % |
| Production de gaz ml/l | 183 | 607 | + 332 % |

TABLEAU 2

| | Production cumulée de gaz ml/l | | |
|---|---|---|---|
| Durée de digestion en nombre de jours | Témoin | Activateur selon l'invention | Variation |
| 146 | 932 | 1 224 | + 31 % |
| 175 | 1 792 | 2 190 | + 22 % |
| 210 | 2 732 | 3 400 | + 24 % |

Ces résultats d'essais montrent d'une part l'effet très positif d'activation biologique obtenu par le produit selon l'invention et une augmentation sensible de la production de gaz par rapport à l'activateur biologique connu de l'état de la technique.

Naturellement, l'invention peut faire l'objet de nombreuses variantes de réalisation.

**Revendications**

1. Activateur biologique perfectionné pour fosse septique du type constitué par un produit en particules solides, non corrosif, non toxique, finement divisé, de surface spécifique importante, présentant en solution une phase colloïdale en suspension et une phase floculante, et un pouvoir réducteur d'origine minérale, ayant pour fonction de constituer un support pour la flore microbienne anaérobie d'une fosse septique en vue d'augmenter la densité de saturation bactérienne dans une fosse septique pour une quantité équivalente de nutriment, caractérisé par le fait que sa surface spécifique (en m$^2$/g) est comprise entre 25 et 60 ; sa capacité d'échange cationique (en meq/100 g) est comprise entre 9 et 32 ; au moins 80 % des particules a une granulométrie inférieure à 16 microns et au moins 50 % une granulométrie inférieure à 4 microns ; sa densité dans et relative à l'eau est comprise entre 2 et 2,75 ; son encombrement est compris entre 1,5 et 2,6 ; son taux de gonflement (en %) est compris entre 0 et 65 ; son pH est compris entre 6,8 et 7,9 ; son potentiel d'oxydo-réduction est de l'ordre de - 500 mV ; il présente un taux de matières volatiles (en %) compris entre 6,5 et 9,5 ; il contient entre 43 % et 94 % de silice en SiO$_2$ ; entre 3 % et 30 % d'aluminium en Al$_2$O$_3$ ; entre 1,8 % et 7,7 % de fer en Fe$_2$O$_3$ ; entre 1,3 % et 5,9 % de calcium en CaO ; il contient entre 75 % et 90 % de particules principalement de kaolinites et de 25 à 10 % de matériau vitreux ; la kaolinite présentant un potentiel d'oxydo-réduction voisin de celui des boues d'une fosse septique, notamment de l'ordre de - 500 mV ; le matériau vitreux présentant en combinaison une surface spécifique (en m$^2$/g) de 90 à 110 et une capacité d'échange cationique (en meq/100 g) de 56 à 70.

**2.** Activateur selon la revendication 1 caractérisé par le fait qu'il contient de l'ordre de 1 % à 2 % de MgO et Na$_2$O chacun et de l'ordre de moins d'un % de TiO$_2$, K$_2$O et P$_2$O$_5$ chacun.

**3.** Activateur selon l'une quelconque des revendications 1 et 2 caractérisé par le fait qu'il contient comme teneur en mg/kg, en oligoéléments, du manganèse entre 168 et 724, notamment entre 240 et 465 préférentiellement entre 300 et 380 et en particulier 344 ; du cobalt entre 169 et 217, notamment entre 173 et 216, préférentiellement entre 175 et 214 et en particulier 194 ; du zinc entre 601 et 1009, notamment 713 et 964, préférentiellement entre 750 et 918 et en particulier 834 ; du cuivre entre 1641 et 2976, notamment entre 2038 et 2815, préférentiellement entre 2170 et 2653 et en particulier 2412 ; du beryllium entre 37,8 et 69,4, notamment entre 47,2 et 65,5, préférentiellement entre 50,4 et 61,7 et en particulier 56,04 ; du titane entre 13068 et 16368, notamment entre 13200 et 16302 préférentiellement entre 13284 et 16236 et en particulier 14760.

## Claims

**1.** Improved biological activator for a sceptic tank, of the type consisting of a finely divided, non-toxic, non-corrosive product of large specific surface area in the form of solid particles, possessing in solution a suspended colloidal phase and a flocculant phase, and a reducing power of inorganic origin, the function of which is to constitute a support for the anaerobic microbial flora of a sceptic tank for the purpose of increasing the density of bacterial saturation in a sceptic tank for an equivalent quantity of nutrient, characterised in that its specific surface area (in m$^2$/g) is between 25 and 60; its cation exchange capacity (in meq/100 g) is between 9 and 32; at least 80% of the particles has a particle size of less than 16 microns and at least 50% a particle size of less than 4 microns; its density in and relative to water is between 2 and 2.75; its displacement is between 1.5 and 2.6; its degree of swelling (in %) is between 0 and 65; its pH is between 6.8 and 7.9; its oxidation-reduction potential is of the order of -500 mV; it possesses a volatile matter content (in %) of between 6.5 and 9.5; it contains between 43% and 94% of silica as SiO$_2$; between 3% and 30% of aluminium as Al$_2$O$_3$; between 1.8% and 7.7% of iron as Fe$_2$O$_3$; between 1.3% and 5.9% of calcium as CaO; it contains between 75% and 90% of particles chiefly of kaolinites, and from 25 to 10% of vitreous material; the kaolinite possessing an oxidation-reduction potential similar to that of the sludges of a septic tank, in particular of the order of -500 mV; the vitreous material possessing in combination a specific surface area (in m$^2$/g) of 90 to 110 and a cation exchange capacity (in meq/100 g) of 56 to 70.

**2.** Activator according to Claim 1, characterised in that it contains of the order of 1% to 2% of MgO and Na$_2$O each, and of the order of less than one % of TiO$_2$, K$_2$O and P$_2$O$_5$ each.

**3.** Activator according to either of Claims 1 and 2, characterised in that it contains, as a content in mg/kg, as trace elements, manganese of between 168 and 724, in particular between 240 and 465, preferably between 300 and 380 and especially 344; cobalt between 169 and 217, in particular between 173 and 216, preferably between 175 and 214 and especially 194; zinc between 601 and 1009, in particular between 713 and 964, preferably between 750 and 918 and especially 834; copper between 1641 and 2976, in particular between 2038 and 2815, preferably between 2170 and 2653 and especially 2412; beryllium between 37.8 and 69.4, in particular between 47.2 and 65.5, preferably between 50.4 and 61.7 and especially 56.04; titanium between 13068 and 16368, in particular between 13200 and 16302, preferably between 13284 and 16236 and especially 14760.

## Patentansprüche

**1.** Perfektioniertes biologisches Aktivierungsmittel für Klärgruben, bestehend aus einem Produkt mit festen, nicht korrosiven, ungiftigen, feinverteilten Bestandteilen mit großer spezifischer Oberfläche, die in Lösung eine Suspensionskolloidphase und Flockungsphase sowie eine Reduktionsfähigkeit mineralischen Ursprungs aufweisen, dessen Aufgabe darin besteht, einen Träger für die mikrobische anaerobe Flora in einer Klärgrube zu bilden, um die Dichte der bakteriellen Sättigung in der Klärgrube bei gleicher Menge Nährsubstanz zu erhöhen, **dadurch gekennzeichnet**, daß die spezifische Oberfläche (in m$^2$/g) zwischen 25 und 60, die Kationen-Austauschkapazität (in meq/100 g) zwischen 9 und 32, die Korngröße bei mindestens 80 % der festen Teile unter 16 $\mu$m und bei mindestens 50 % unter 4 $\mu$m, die Dichte in und gegenüber Wasser zwischen 2 und 2,75, die Raumbeanspruchung zwischen 1,5 und 2,6, der Ausdehnungswert (in %) zwischen 0 und 65, der pH-Wert zwischen 6,8 und 7,9 und das Oxidations-Reduktionspotential bei ca. -500 mV liegt, daß weiterhin der Anteil flüchtiger Substanzen (in %) zwischen 6,5 und 9,5, der Siliziumanteil bei $SiO_2$ zwischen 43% und 94%, der Aluminiumanteil bei $Al_2O_3$ zwischen 3% und 30%, der Eisenanteil bei $Fe_2O_3$ zwischen 1,8% und 7,7%, der Calciumanteil bei CaO zwischen 1,3% und 5,9% und der Anteil überwiegend kaolinitischer Bestandteile zwischen 75% und 90% bzw. der Anteil glasiger Bestandteile zwischen 25% und 10% beträgt, wobei die kaolinitischen Bestandteile ein Oxidations-Reduktionspotential aufweisen, das dem des Schlammes in einer Klärgrube weitgehend entspricht und somit um -500 mV liegt und die glasigen Bestandteile in Verbindung eine spezifische Oberfläche (in $m^2/g$) zwischen 90 und 1010 sowie eine Kationenaustauschkapazität (in meq/100g) zwischen 56 und 70 aufweisen.

2. Aktivierungsmittel nach Patentanspruch 1, **dadurch gekennzeichnet**, daß es ca. 1-2% MgO und 1-2% $Na_2O$ sowie ca. 1% $TiO_2$, $K_2O$ und $P_2O_5$ enthält.

3. Aktivierungsmittel nach Patentanspruch 1 oder 2, **dadurch gekennzeichnet,** daß es an Oligoelementen einen Gehalt (in mg/kg) vom Mangan zwischen 168 und 724, insbesondere zwischen 240 und 465, Vorzugsweise zwischen 300 und 380 und speziell von 344, von Kobalt zwischen 169 und 217, insbesondere zwischen 163 und 216, vorzugsweise zwischen 175 und 214 und speziell von 194, von Zink zwischen 601 und 1009, insbesondere zwischen 713 und 964, vorzugsweise zwischen 750 und 918 und speziell von 834, von Kupfer zwischen 1641 und 2976, insbesondere zwischen 2038 und 2815, vorzugsweise zwischen 2170 und 2653 und speziell von 2412, von Berryllium zwischen 37,8 und 69,4, insbesondere zwischen 47,2 und 65,5, vorzugsweise zwischen 50,4 und 61,7 und speziell von 56,04, von Titan zwischen 13068 und 16368, insbesondere zwischen 13200 und 16302, vorzugsweise zwischen 13284 und 16236 und speziell von 14760 besitzt.